# EUROPÄISCHE PATENTANMELDUNG

(11) **EP 2 063 381 A1**
(43) Veröffentlichungstag der Anmeldung: **27.05.2009**
(21) Anmeldenummer: 08105852.1
(22) Anmeldetag: 24.11.2008
(51) Int. Cl.: G06K 7/00, G06K 13/08

(54) **Karteneinzugsvorrichtung**

(30) Priorität: 26.11.2007 DE 102007056753
(71) Anmelder: Continental Automotive GmbH, 30165 Hannover (DE)
(72) Erfinder: Wahler, Torsten, Bad Dürrheim 78073 (DE)

(57) **Zusammenfassung**

Die Erfindung bezieht sich auf eine Karteneinzugsvorrichtung insbesondere für einen Fahrtschreiber eines Kraftfahrzeugs zum vollständigen Einzug einer Karte, insbesondere einer Chipkarte 15, mit einer Transportvorrichtung 4, die einen Aufnahmeschlitz 14 mit einer Einführöffnung 16 zur Aufnahme der Karte aufweist. Dabei ist die Transporteinrichtung 4 in einem Schacht 3 geführt von einem durch einen Antrieb um eine Drehachse 6 drehbar antreibbaren Antriebsteil auf einem Transportweg zwischen einer Ausfahrposition und einer Einzugsposition translatorisch bewegbar antreibbar. Das Antriebsteil ist in einer einzigen Drehrichtung drehbar antreibbar und weist ein Koppelelement auf, das in einem Abstand zur Drehachse 6 angeordnet ist und entlang einer sich im wesentlichen quer zur Erstreckung des Bewegungswegs der Transportvorrichtung 4 erstreckenden Führungsbahn an der Transportvorrichtung 4 bewegbar geführt ist. Dabei befindet sich das Koppelelement in der Ausfahrposition und in der Einzugsposition in einer Mittenposition zwischen den beiden Enden der Führungsbahnen.

## Beschreibung

Die Erfindung bezieht sich auf eine Karteneinzugsvorrichtung insbesondere für einen Fahrtschreiber eines Kraftfahrzeugs zum vollständigen Einzug einer Karte, insbesondere einer Chipkarte, mit einer Transportvorrichtung, die einen Aufnahmeschlitz mit einer Einführöffnung zur Aufnahme der Karte aufweist, wobei die Transportvorrichtung in einem Schacht geführt von einem durch einen Antrieb um eine Drehachse drehbar antreibbaren Antriebsteil auf einem Transportweg zwischen einer Ausfahrposition und einer Einzugsposition translatorisch bewegbar antreibbar ist.

Derartige digitale Fahrtschreiber verwenden als Karte eine Chipkarte, wobei bei in den Fahrtschreiber eingeführter Chipkarte ein Austausch von fahrer- und fahrzeugspezifischen Daten zwischen der Chipkarte und einer Lese- und Speichereinheit erfolgt.

Während der Aufzeichnung von Daten bei der Benutzung des Fahrzeugs darf die Chipkarte unter keinen Umständen von außen entnommen oder aus der Kartenaufnahmevorrichtung ausgeworfen werden können.

Dabei muß die Chipkarte vollständig eingeführt und verriegelt werden und die Verriegelung muß absolut sicher gegen Manipulation sein.

Bei einer derartigen Karteneinzugsvorrichtung ist es bekannt das Antriebsteil für die Einzugsbewegung und die Ausschubbewegung der Transportvorrichtung mit umschaltbarer Drehrichtung anzutreiben. Dies erfordert einen aufwendigen und damit teuren reversierbaren Motor.

Aufgabe der Erfindung ist es daher eine Karteneinzugsvorrichtung der eingangs genannten Art zu schaffen, die einen einfachen und kostengünstigen Aufbau aufweist.

Diese Aufgabe wird erfindungsgemäß dadurch gelöst, daß das Antriebsteil in einer einzigen Drehrichtung drehbar antreibbar ist und ein Koppelelement aufweist, das in einem Abstand zur Drehachse angeordnet ist und entlang einer sich im Wesentlichen quer zur Erstreckung des Bewegungswegs der Transportvorrichtung erstreckenden Führungsbahn an der Transportvorrichtung bewegbar geführt ist, wobei sich das Koppelelement in der Ausfahrposition und in der Einzugsposition in einer Mittenposition zwischen den beiden Enden der Führungsbahn befindet.

Diese Ausbildung ermöglicht es bei einfachem Aufbau einen Antrieb zu verwenden, der sowohl für die Einzugsbewegung als auch für die Ausschubbewegung nur einen einzigen Drehsinn benötigt und somit die Verwendung eines kostengünstigen, nicht reversiblen Antriebs erlaubt.

Dabei ist die Antriebskinematik mit wenigen Bauelementen einfach und damit defektunanfällig aufgebaut und benötigt nur einen geringen Bauraum insbesondere eine geringe Bauhöhe.

Nach Beendigung der Ausschubbewegung der Karte befindet sich die Transportvorrichtung sofort wieder in der Startposition.

Die Führungsbahn kann sich gerade erstrecken.

In einer einfachen Ausbildung kann das Koppelelement ein Kulissenstein und die Führungsbahn eine Kulissenbahn sein, in die das insbesondere als Kurbelzapfen runden Querschnitts ausgebildete Koppelelement bewegbar eingreift.

Ist das Antriebsteil ein Antriebszahnrad, so kann in einfacher Weise ein Drehantrieb dadurch erfolgen, daß in das Antriebszahnrad eine Zylinderschnecke eingreift, die von einem Drehantrieb, insbesondere von einem Elektromotor unidirektional drehbar antreibbar ist.

Dies reduziert auch wesentlich eine Geräuschbildung während des Antriebsvorgangs.

In einer bevorzugten Ausbildung ist die Transportvorrichtung entgegen einer Federkraft um einen Vorhub aus der Ausfahrposition in eine Aktivierungsposition relativ zu dem in der Mittenposition befindlichen Koppelelement bewegbar, wobei sich die Aktivierungsposition zwischen der Ausfahrposition und der Einzugsposition befindet.

Durch die sich dabei ergebende zwangsgesteuerte Vorauseilung der Transportvorrichtung ist eine definierte Führung möglich, so daß z.B. schädliche mechanische Schwergängigkeiten keinen Einfluß auf die Funktion der Transportvorrichtung haben.

Eine Aktivierung des Antriebs kann manuell ausgelöst werden.

Besonders komfortabel ist es aber, wenn bei Erreichen der Aktivierungsposition von der Transportvorrichtung ein Startsignal auslösbar ist, durch das der Antrieb des Antriebsteils aktivierbar ist.

Dazu kann in einfacher Weise in der Aktivierungsposition der Transportvorrichtung ein Schalter betätigbar und ein Ansteuersignal erzeugbar oder ein Ansteuersignal von einem Sensor erzeugbar, das einer Steuereinheit des Antriebs zur Aktivierung des Antriebs zuführbar ist.

Damit wird ein harmonischer Übergang vom Einstecken der Karte bis zur Übernahme des motorischen Einziehens erreicht, da beide Bewegungsvorgänge ineinander übergehen und in dieselbe Richtung wirken.

Zur Definition des Endes der manuellen Einschubbewegung der Karte als auch als Anschlag zur manuellen Bewegung der Transportvorrichtung in die Aktivierungsposition kann die Karte bis zu einem oder mehreren Anschlägen der Transportvorrichtung in den Aufnahmeschlitz der Transportvorrichtung einführbar sein.

Dabei ist auch nur eine geringe Federkraft zu überwinden, was den Bedienkomfort erheblich steigert und nur ein leichtes Anschieben der Karte erfordert.

Damit die Karte bei der weiteren Einzugsbewegung durch die Transportvorrichtung von dieser sicher mitgenommen wird, kann die Transportvorrichtung ein oder mehrere Halteelemente aufweisen, durch die die Karte kraftschlüssig im Aufnahmeschlitz haltbar ist.

Dazu kann in einfacher Ausbildung die Transportvorrichtung in einer oder mehreren Seitenwänden des Aufnahmeschlitzes in Einführrichtung freiragende Federarme aufweisen, deren freie Endbereiche in den Aufnahmeschlitz hineingeneigt sind und damit die Karte festklemmen.

Vorzugsweise besteht die Transportvorrichtung aus einem plattenartigen Unterteil und einem plattenartigen Oberteil, die mit ihren plattenartigen Ebenen zueinander bewegbar und in Erstreckungsrichtung des Bewegungsweges um den Vorhub relativ zueinander verschiebbar sind sowie zwischen sich den Aufnahmeschlitz bilden, wobei das Unterteil eine sich gerade erstreckende erste Führungsbahn und das Oberteil eine die Relativbewegung zum Unterteil zulassende zweite Führungsbahn aufweist und das Koppelelement sowohl entlang der ersten Führungsbahn als auch der zweiten Führungsbahn bewegbar ist.

Ist dabei das plattenartige Oberteil aus seinem Bewegungsweg zwischen der Aktivierungsposition und der Einzugsposition durch eine oder mehrere feststehende Rampen gegen das untere plattenartige Unterteil bewegbar beaufschlagbar, so wird die Karte mit erhöhter Sicherheit in der Transportvorrichtung gehalten.

Eine definierte Lage der Transportvorrichtung ist während des gesamten Einzugs- und Ausschubprozesses sichergestellt, wenn die Führungsbahn aus fünf Bahnteilen besteht, wobei ein erstes Bahnteil sich mittig um eine dem Vorhub entsprechende Länge in Erstreckungsrichtung des Bewegungswegs erstreckt, mit einem zweiten Bahnteil, das sich von dem der Einführöffnung näheren Ende des ersten Bahnteils gerade quer zur Richtung des Bewegungsweges erstreckt und eine dem Abstand des Koppelelements zur Drehachse entsprechende Länge aufweist, mit einem dritten Bahnteil, das sich entgegen der Erstreckungsrichtung des zweiten Bahnteils von dem der Einführöffnung entfernteren Ende des ersten Bahnteils gerade erstreckt und eine dem Abstand des Koppelelements zur Achse entsprechende Länge aufweist, mit einem vierten Bahnteil, das sich von dem der Einführöffnung näheren Ende des ersten Bahnteils um eine geringere Länge, als der Länge des zweiten Bahnteils entgegen dem zweiten Bahnteil erstreckt und mit einem fünften Bahnteil, durch das die dem ersten Bahnteil entfernten Enden des dritten Bahnteils und des vierten Bahnteils miteinander verbunden sind.

Um eine sichere Führung des Koppelelements von dem fünften Bahnteil zum dritten Bahnteil zu gewährleisten kann das Oberteil mit dem Unterteil durch eine oder mehrere Kupplungseinrichtungen verbindbar sein, die auf dem Bewegungsweg der Transportvorrichtung von der Ausfahrposition zur Einzugsposition ausgekuppelt und auf dem Bewegungsweg der Transportvorrichtung von der Einzugsposition zur Ausfahrposition während des Übergangsbereichs von dem fünften Bahnteil zum dritten Bahnteil eingekuppelt ist.

Dazu kann die Kupplungseinrichtung ein an dem Unterteil angeordnetes, zum Oberteil gerichtetes Mitnehmerelement und ein an dem Oberteil angeordnetes, zum Unterteil gerichtetes Mitnahmeelement aufweisen, wobei bei ausgekuppelter Kupplungseinrichtung Mitnehmerelement und Mitnahmeelement eingriffslos in Bewegungsrichtung der Transportvorrichtung aneinander vorbeibewegbar und bei eingekuppelter Kupplungseinrichtung das Mitnahmeelement von dem Mitnehmerelement hintergriffen und in Ausfahrrichtung der Transportvorrichtung mitnehmbar ist.

In einfacher Ausbildung ist dabei das Mitnehmerelement eine Klinke und/oder das Mitnahmeelement ein Sperrhaken.

Weist die Klinke eine zum Oberteil gerichtete Rastflanke auf, von der in sich der Einführöffnung entfernenden Richtung eine sich dem Oberteil entfernende Klinkenrampe ausgeht, so kann bei der gegenüber dem Unterteil zunächst schnelleren Ausfahrbewegung des Oberteils die Klinke sicher von dem Sperrhaken überfahrbaren werden und der Sperrhaken rastet nach dem Überfahren der Klinke vor der Sperrflanke ein und wird sicher von dem Sperrhaken in Ausfahrrichtung mitgenommen.

Weist dabei auch der Sperrhaken eine zum Unterteil gerichtete Sperrflanke auf, von der in sich der Einführöffnung annähernden Richtung eine sich dem Unterteil entfernende Gleitrampe ausgeht, so führt dies zu einer weiteren Erhöhung der Sicherheit gegen Ausrasten des Sperrhakens von der Rastflanke der Klinke.

Das Mitnehmerelement kann entgegen einer Federkraft in sich von dem Oberteil entfernender Richtung auslenkbar sein, wobei in einfacher, bauteilarmer Ausbildung das Mitnehmerelement an dem freien Ende eines Federarms des Unterteils angeordnet sein kann, der sich von dem Unterteil aus in von der Einführöffnung entfernender Richtung erstreckt.

Bei der voreilenden Einfahrbewegung des Oberteils gegenüber dem Unterteil kommt es zu einem störungsfreien Vorbeibewegen des Sperrhakens an der Klinke, wenn das Mitnehmerelement bei ausgekuppelter Kupplungseinrichtung auf dem Bewegungsweg an dem Mitnahmeelement vorbei zur Einzugsposition durch einen feststehenden Niederhalter in Richtung von dem Oberteil weg beaufschlagt ist.

Bei eingekuppelter Kupplungseinrichtung ist ein Aushaken der Klinke aus dem Sperrhaken nicht möglich, wenn eine federnde Auslenkung des Mitnehmerelements von dem Oberteil weg durch ein feststehendes Blockierelement blockiert ist.

Der Federarm kann eine quer zu seiner Auslenkrichtung hervorstehende erste Fahne aufweisen, die von dem Niederhalter von dem Oberteil weg beaufschlagbar ist. Dadurch ist die Kupplungseinrichtung sicher in ausgekuppelter Position beim Überfahren der Klinke durch den Sperrhaken auf dem Bewegungsweg zur Einzugsposition.

In einfacher Ausbildung kann der Federarm eine quer zu seiner Auslenkrichtung hervorstehende zweite Fahne aufweisen, die die Auslenkung des Mitnehmerelements von dem Oberteil weg blockierend an dem Blockierelement anlegbar ist und so ein sicheres Einrasten des Sperrhakens in die Klinke sicherstellt.

In bauteilsparender Doppelfunktion kann dabei die erste Fahne und die zweite Fahne durch ein einziges Fahnenbauteil gebildet sein.

Damit arbeitet das ganze System einschließlich der die Bewegungsabläufe überwachenden Sensorik zuverlässig.

Ausführungsbeispiele der Erfindung sind in der Zeichnung dargestellt und werden im folgenden näher beschrieben. Es zeigen
- Figur 1: eine perspektivische Ansicht eines ersten Ausführungsbeispiels einer Karteneinzugsvorrichtung in Ausfahrposition
- Figur 2: die Karteneinzugsvorrichtung nach Figur 1 in der Einzugsposition
- Figur 3: die Karteneinzugsvorrichtung nach Figur 1 mit Chipkarte in der Ausfahrposition
- Figur 4: die Karteneinzugsvorrichtung nach Figur 1 mit Chipkarte in der Einzugsposition
- Figur 5: eine Draufsicht eines zweiten Ausführungsbeispiels einer Karteneinzugsvorrichtung mit außerhalb befindlicher Chipkarte in der Einzugsposition
- Figur 6: die Karteneinzugsvorrichtung nach Figur 5 mit eingeführter Chipkarte in der Einzugsposition
- Figur 7: die Karteneinzugsvorrichtung nach Figur 5 mit eingeführter Chipkarte in einer Aktivierungsposition
- Figur 8: die Karteneinzugsvorrichtung nach Figur 5 mit eingeführter Chipkarte nach einer ersten Teilstrecke auf dem Weg aus der Aktivierungsposition zur Einzugsposition
- Figur 9: die Karteneinzugsvorrichtung nach Figur 5 mit eingeführter Chipkarte in der Einzugsposition
- Figur 10: die Karteneinzugsvorrichtung nach Figur 5 mit eingeführter Chipkarte nach einer ersten Teilstrecke aus der Einzugsposition zur Aktivierungsposition
- Figur 11: die Karteneinzugsvorrichtung nach Figur 5 mit eingeführter Chipkarte nach einer zweiten Teil- strecke aus der Einzugsposition zur Aktivierungsposition
- Figur 12: die Karteneinzugsvorrichtung nach Figur 5 mit eingeführter Chipkarte nach einer dritten Teilstrecke aus der Einzugsposition zur Aktivierungsposition
- Figur 13: einen Querschnitt entlang der Linie V - V in Figur 5
- Figur 14: einen Querschnitt entlang der Linie VIII - VIII in Figur 8
- Figur 15: eine Draufsicht auf einen Ausschnitt der Karteneinzugsvorrichtung nach Figur 5
- Figur 16: einen Querschnitt entlang der Linie XV - XV in Figur 15
- Figur 17: eine perspektivische Ansicht auf den Ausschnitt nach Figur 15
- Figur 18: eine perspektivische Unteransicht eines Oberteils einer Transportvorrichtung der Karteneinzugsvorrichtung nach Figur 5
- Figur 19: eine perspektivische Oberansicht eines Oberteils einer Transportvorrichtung der Karteneinzugsvorrichtung nach Figur 5
- Figur 20: eine Draufsicht eines Antriebszahnrads der Karten-Einzugsvorrichtung nach Figur 5
- Figur 21: eine Draufsicht eines dritten Ausführungsbeispiels einer Karteneinzugsvorrichtung nach einer ersten Teilstrecke auf dem Weg aus der Einzugsposition zur Ausfahrposition
- Figur 22: eine Draufsicht der Karteneinzugsvorrichtung nach Figur 21 auf halber Strecke aus der Einzugsposition zur Ausfahrposition
- Figur 23: eine Draufsicht der Karteneinzugsvorrichtung nach Figur 21 nach der ersten Hälfte des Weges aus der Einzugsposition zur Ausfahrposition
- Figur 24: eine Draufsicht auf das Unterteil der Transportvorrichtung der Karteneinzugsvorrichtung nach Figur 21
- Figur 25: eine Seitenansicht des Unterteils nach Figur 24
- Figur 26: eine perspektivische Obenansicht eines Ausschnitts des Unterteils nach Figur 24
- Figur 27: eine Draufsicht auf das Oberteil der Transportvorrichtung der Karteneinzugsvorrichtung nach Figur 21
- Figur 28: einen Schnitt des Oberteils entlang der Linie XXVIII - XXVIII in Figur 27
- Figur 29: eine perspektivische Oberansicht eines Ausschnitts des Oberteils nach Figur 27
- Figur 30: eine Draufsicht auf die Trägerplatte der Karteneinzugsvorrichtung nach Figur 21
- Figur 31: einen Schnitt entlang der Linie XXXI - XXXI in Figur 30
- Figur 32: eine perspektivische Ansicht eines Ausschnitts der Trägerplatte nach Figur 30

- Figur 33: eine perspektivische Schnittansicht eines Ausschnitts der Karteneinzugsvorrichtung nach Figur 21 in Einfahrrichtung der Transportvorrichtung unmittelbar vor dem Übergang von dem vierten zum fünften Bahnteil der zweiten Führungsbahn
- Figur 34: den Ausschnitt nach Figur 33 in Einfahrrichtung der Transportvorrichtung unmittelbar nach dem Übergang von dem vierten zum fünften Bahnteil der zweiten Führungsbahn
- Figur 35: den Ausschnitt nach Figur 33 in Einfahrrichtung der Transportvorrichtung im fünften Bahnteil der der zweiten Führungsbahn
- Figur 36: den Ausschnitt nach Figur 33 in Ausfahrrichtung der Transportvorrichtung am Ende des fünften Bahnteils der zweiten Führungsbahn
- Figur 37: den Ausschnitt nach Figur 33 in Ausfahrrichtung der Transportvorrichtung während des Übergangs von dem fünften zum dritten Bahnteil der zweiten Führungsbahn
- Figur 38: den Ausschnitt nach Figur 33 in Ausfahrrichtung der Transportvorrichtung im dritten Bahnteil der zweiten Führungsbahn.

Die in den Figuren dargestellten Karteneinzugsvorrichtungen für einen Fahrtschreiber eines Kraftfahrzeugs weisen eine Trägerplatte 1 mit zwei in einem Abstand darauf angeordneten Seitenführungen 2 auf, die zwischen sich einen Schacht 3 bilden, in dem eine Transportvorrichtung 4, 4', 4'' zwischen einer Ausfahrposition und einer Einzugsposition translatorisch geführt bewegbar ist.

Im hinteren Bereich ist auf der Trägerplatte 1 ein Antriebszahnrad 5 um eine Drehachse 6 drehbar gelagert, in deren Zähne eine Zylinderschnecke 7 eingreift, die von einem Elektromotor 8 unidirektional drehbar antreibbar ist, was durch einen Drehrichtungspfeil 9 dargestellt ist.

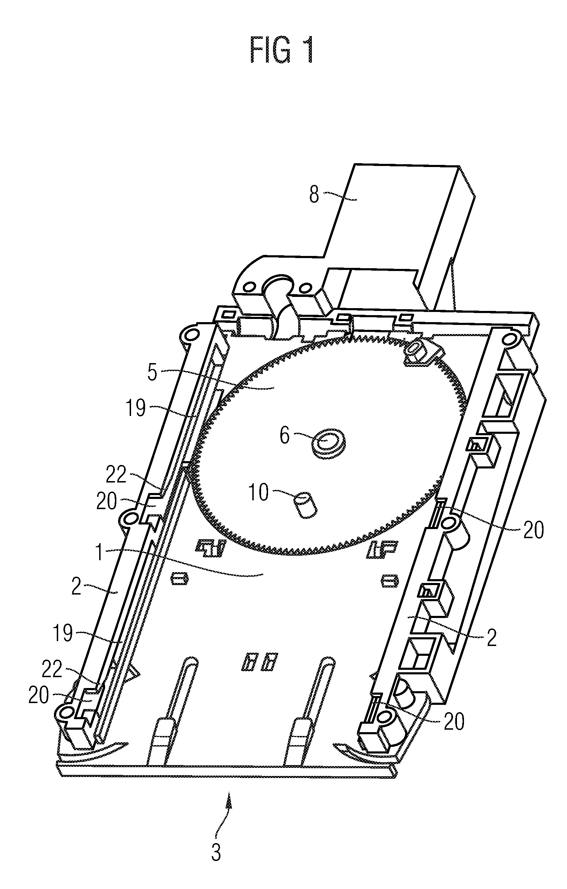

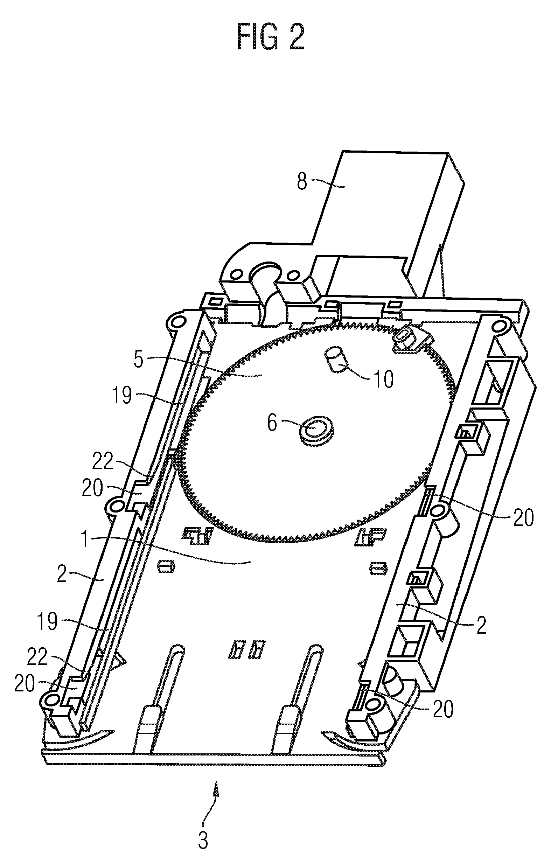

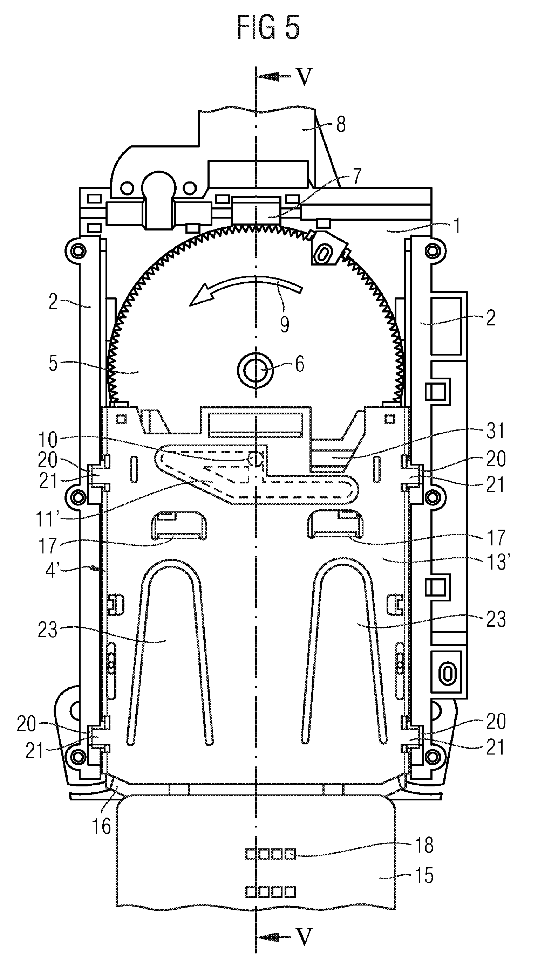

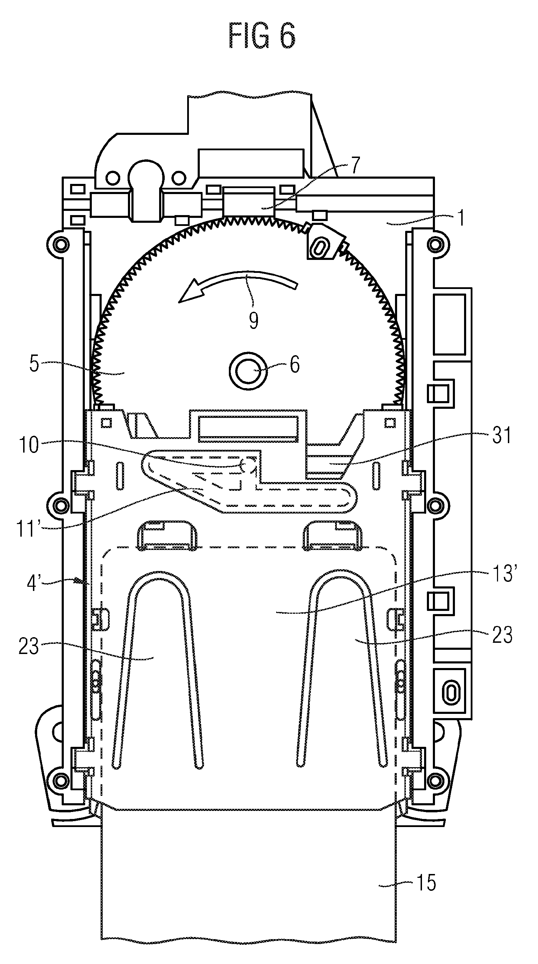

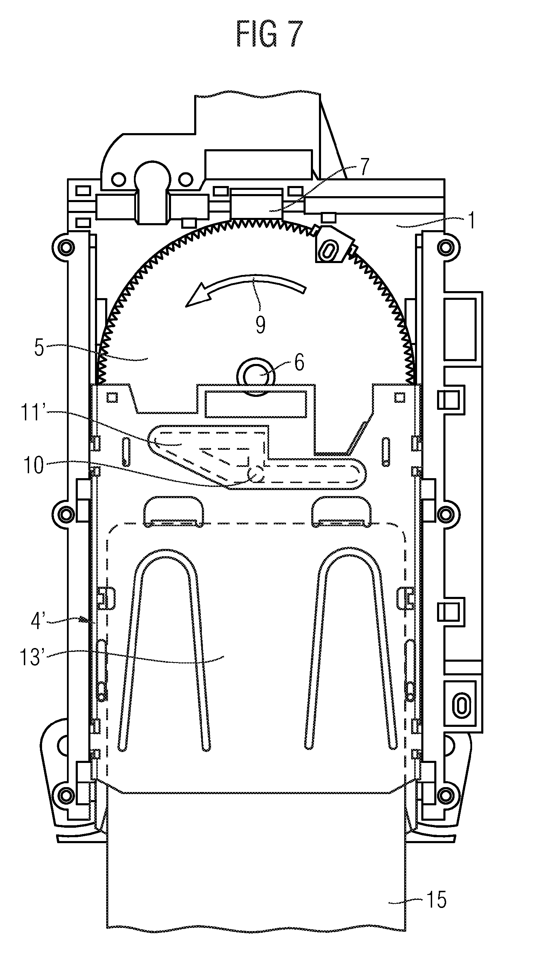

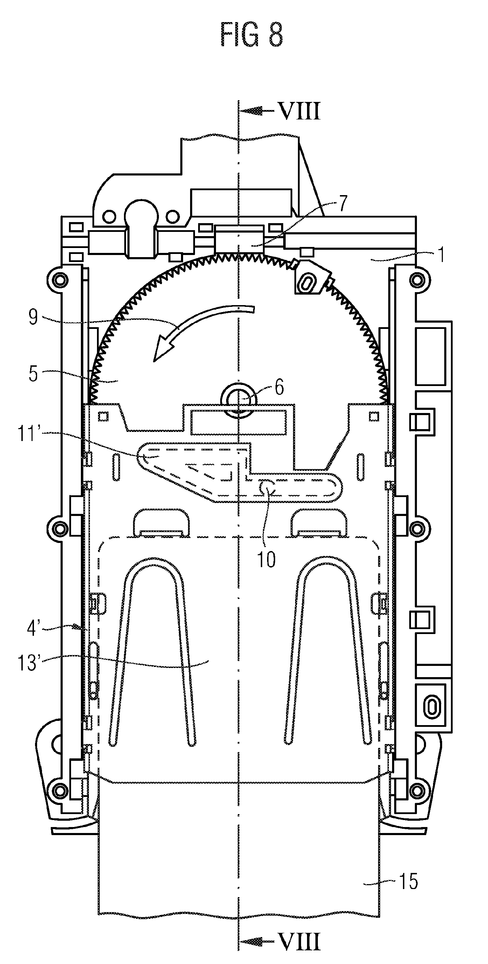

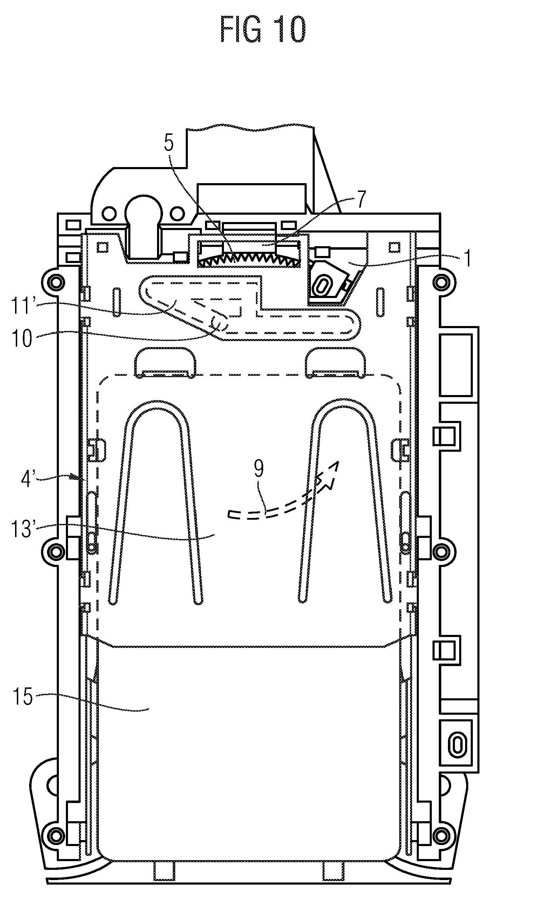

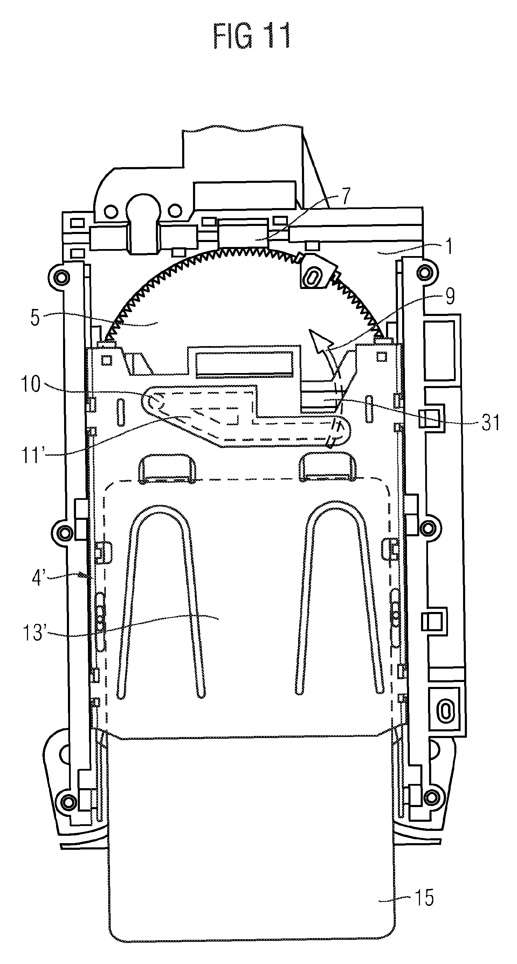

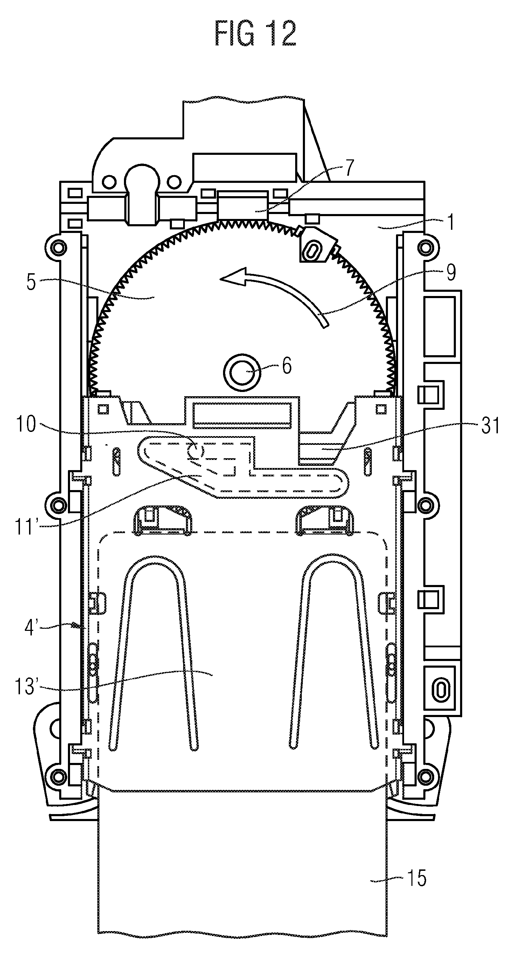

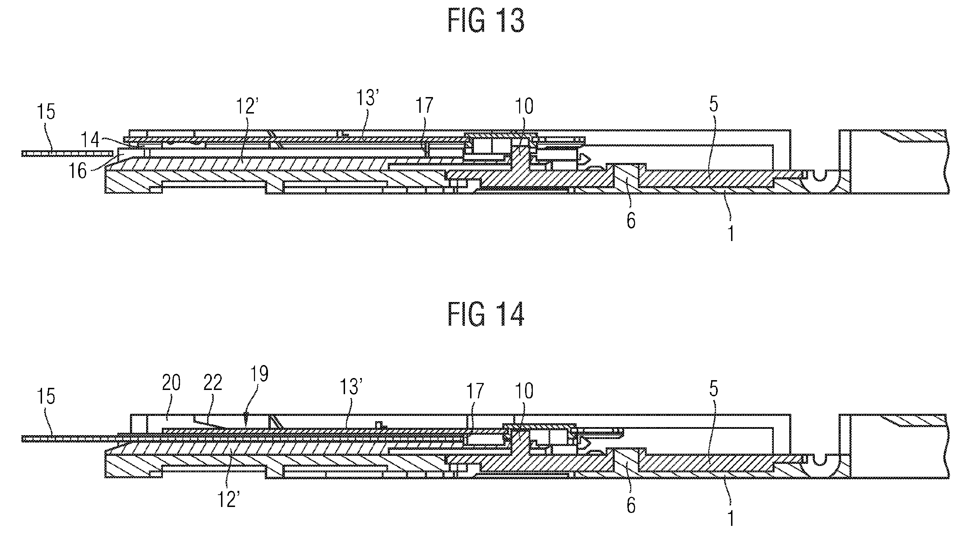

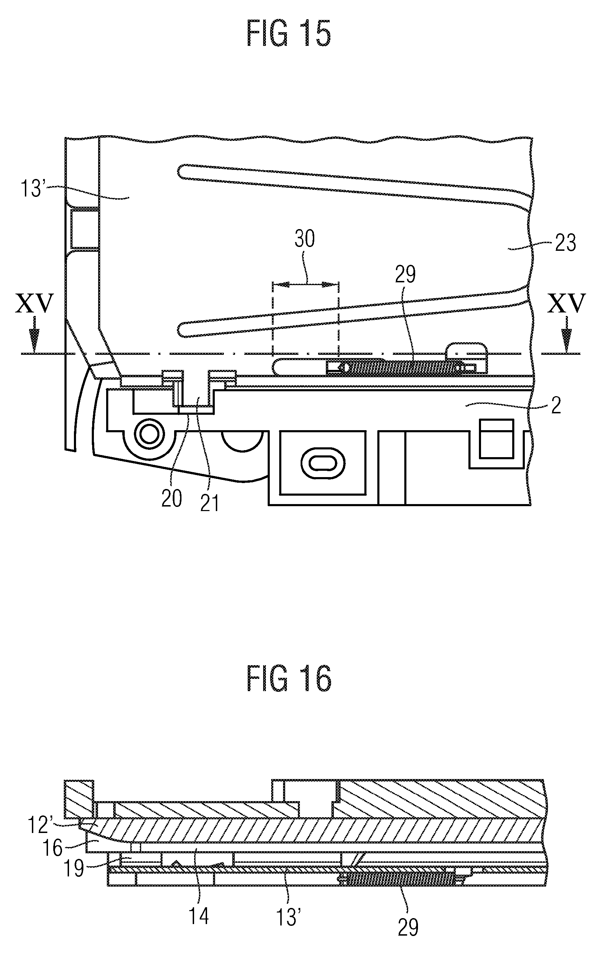

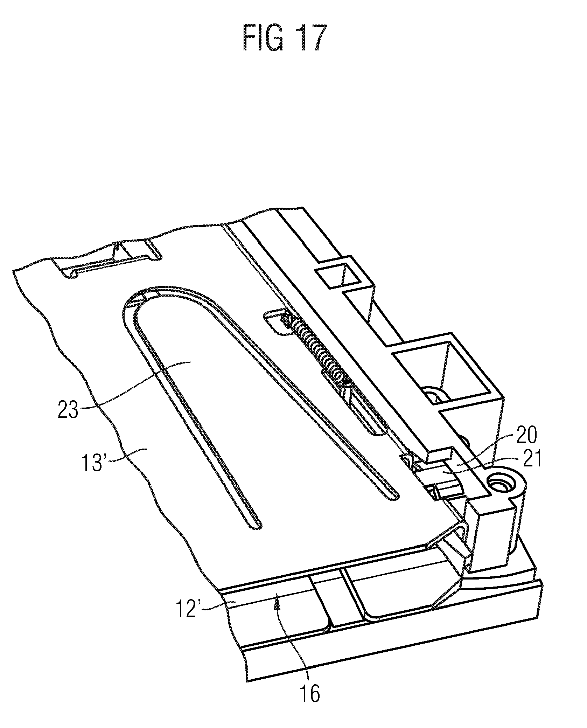

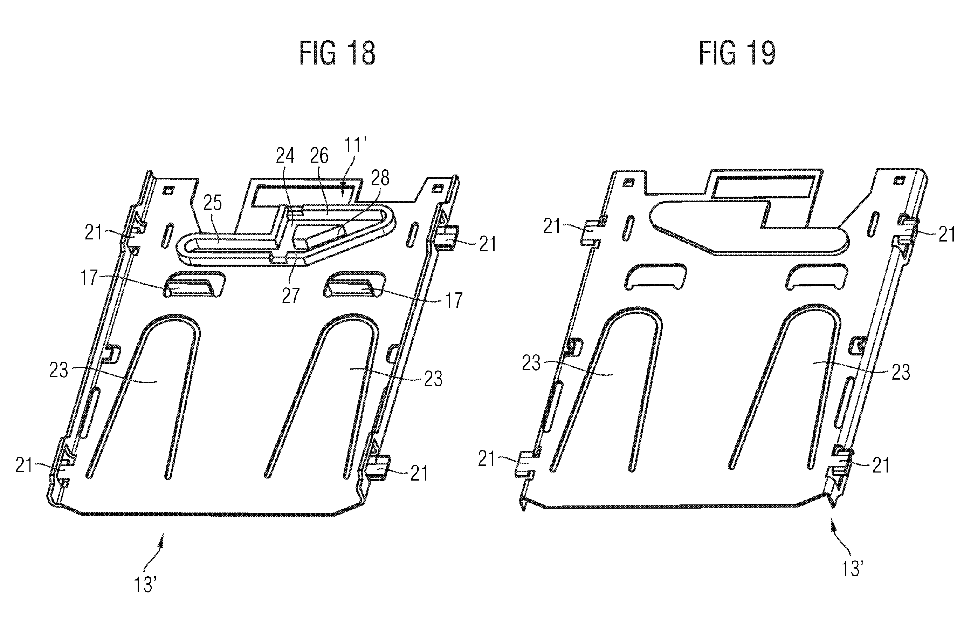

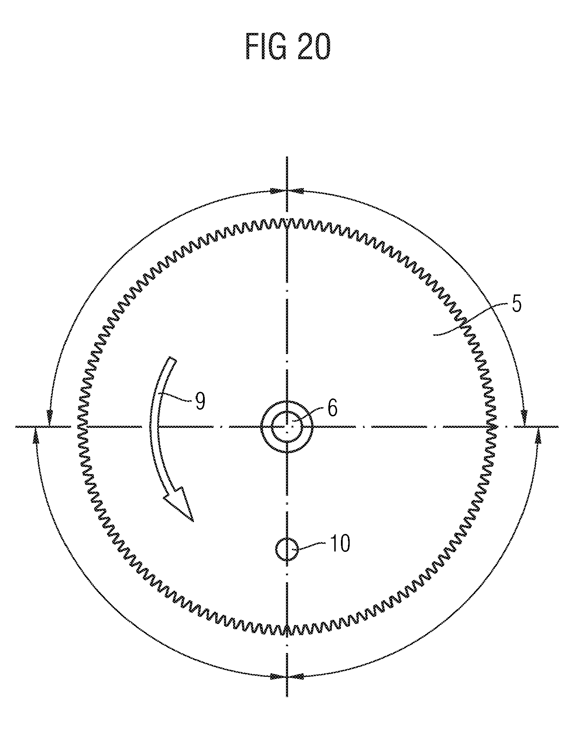

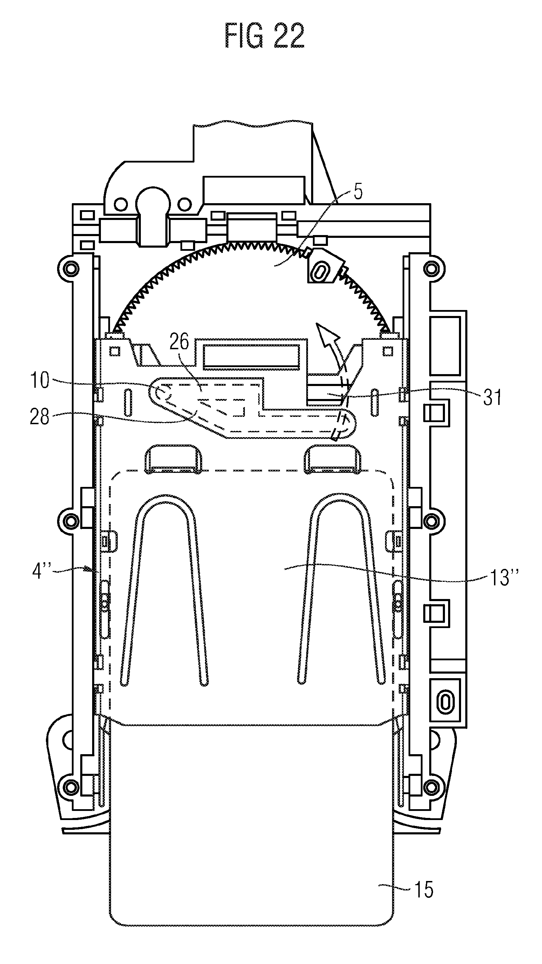

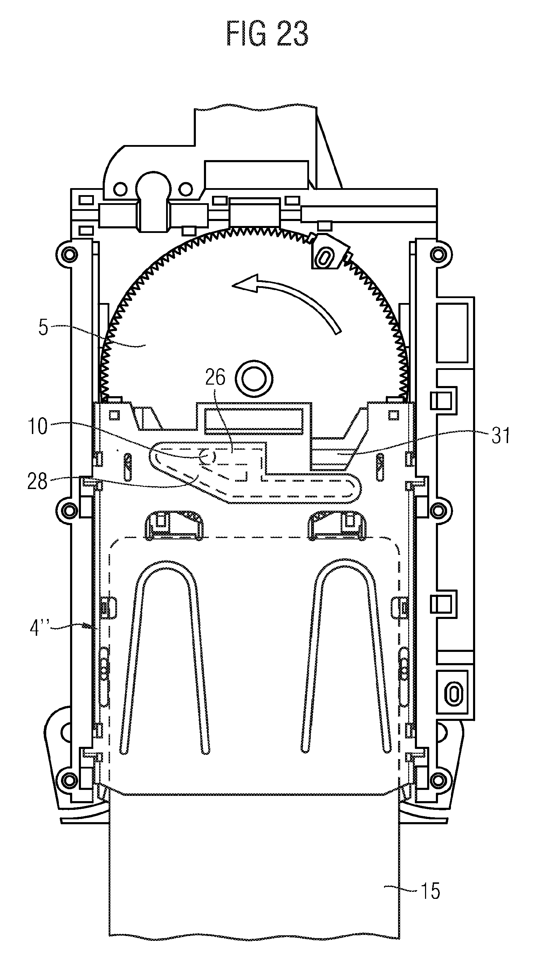

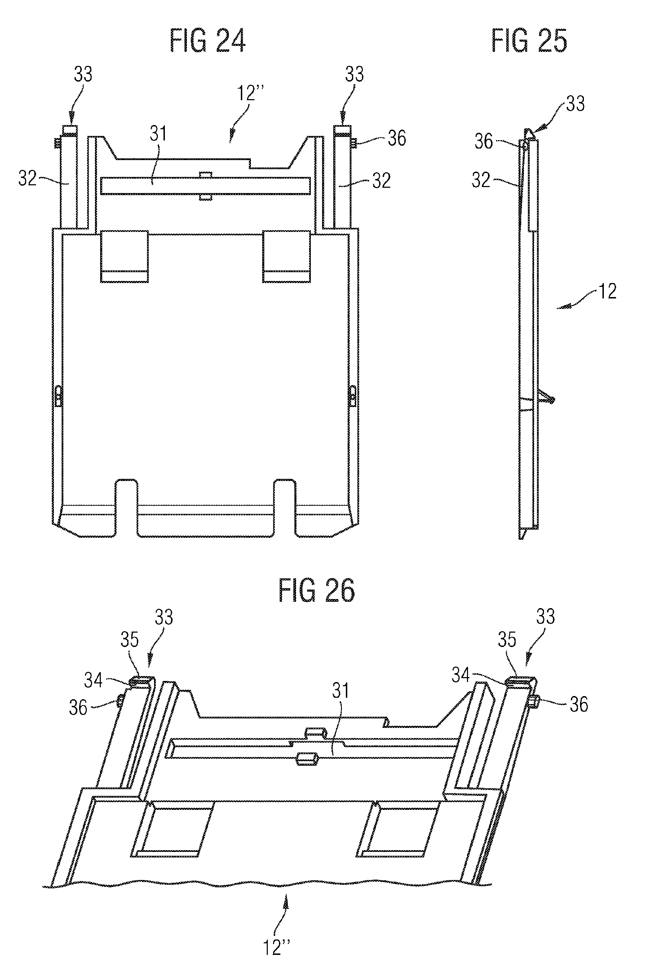

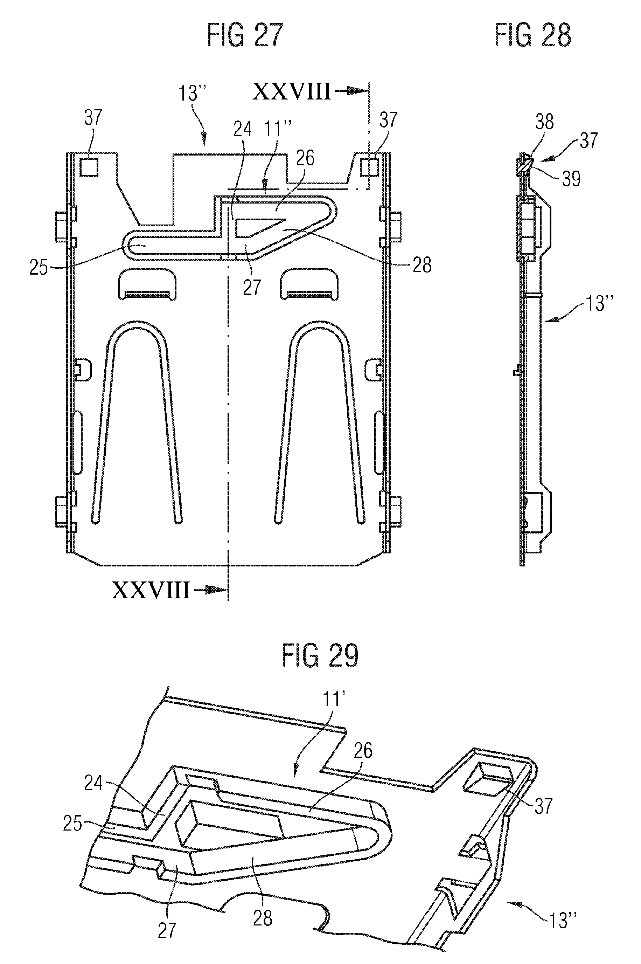

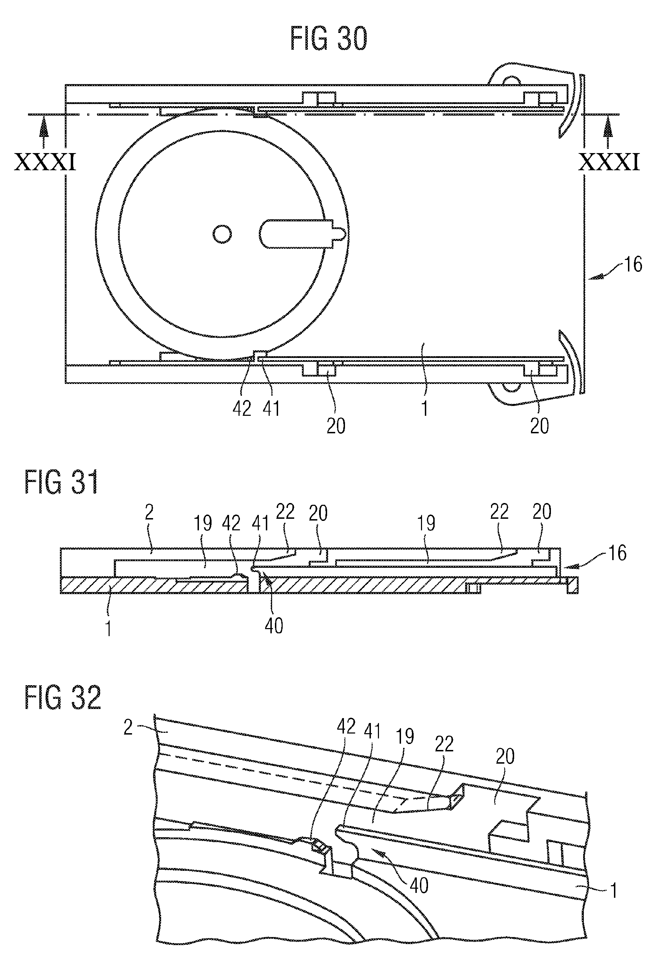

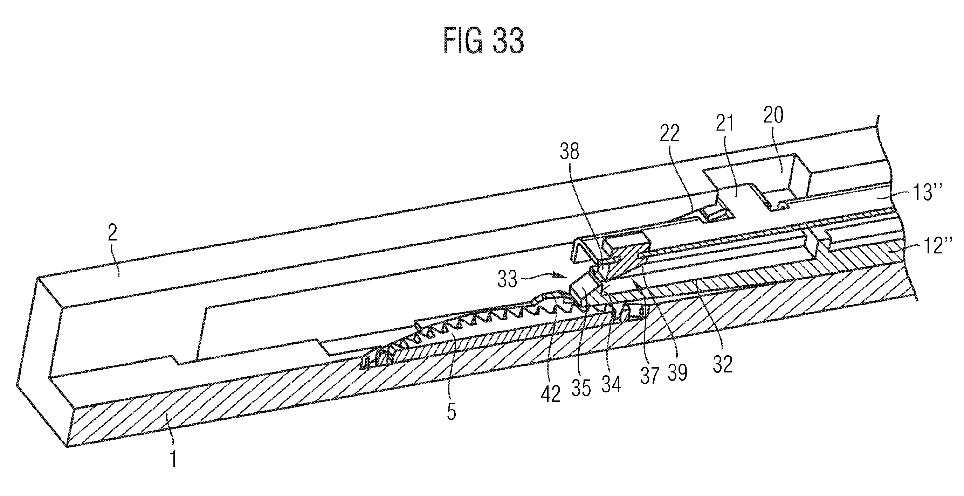

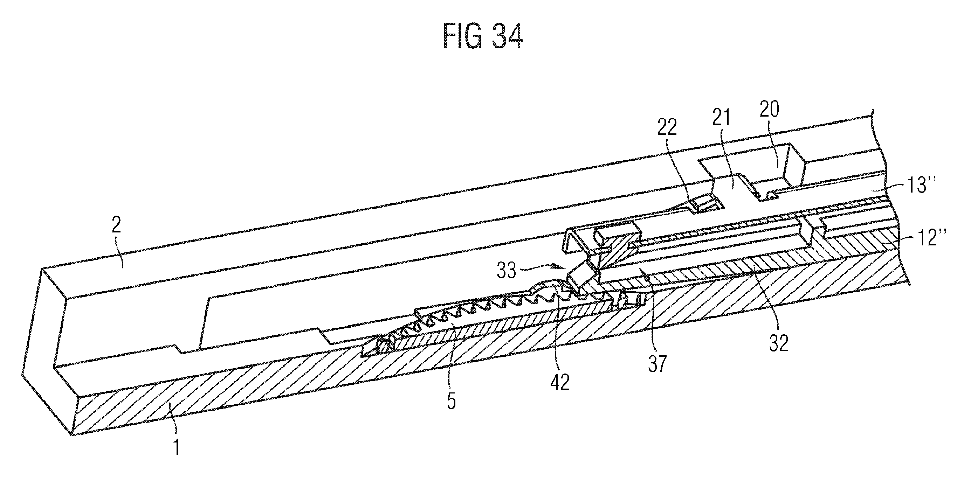

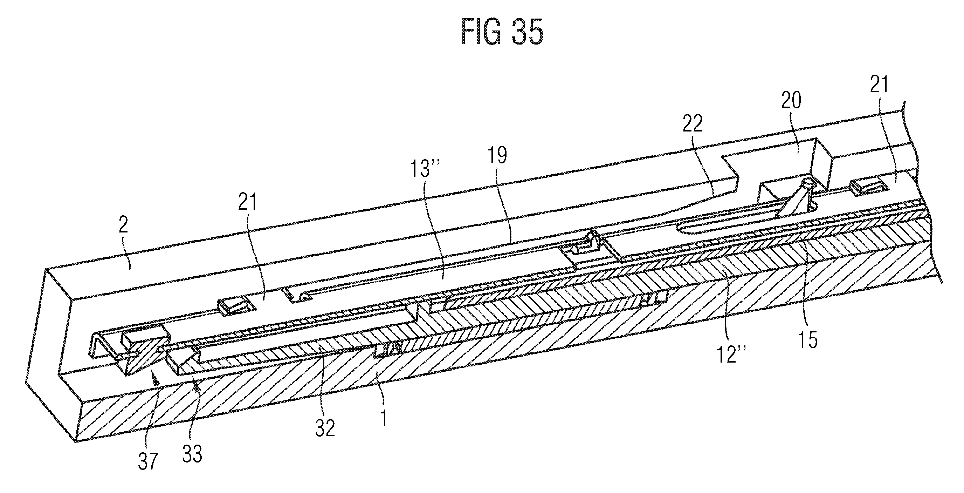

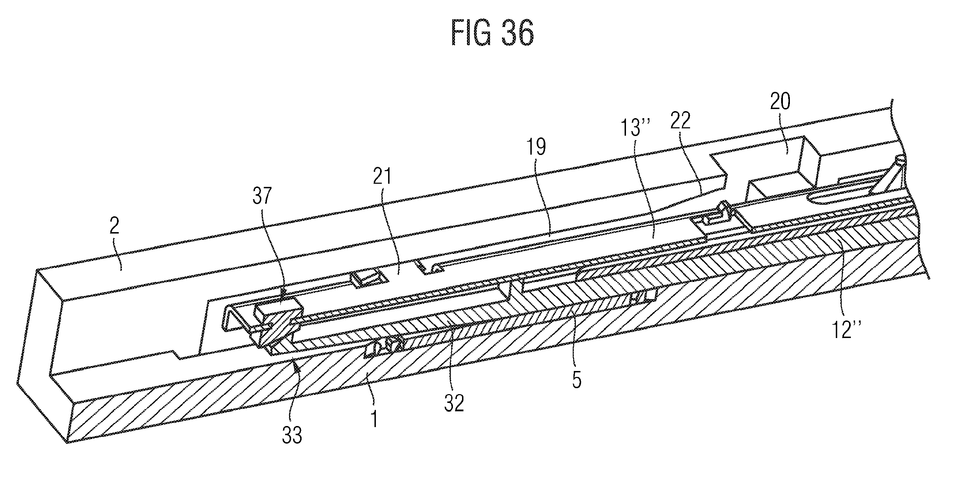

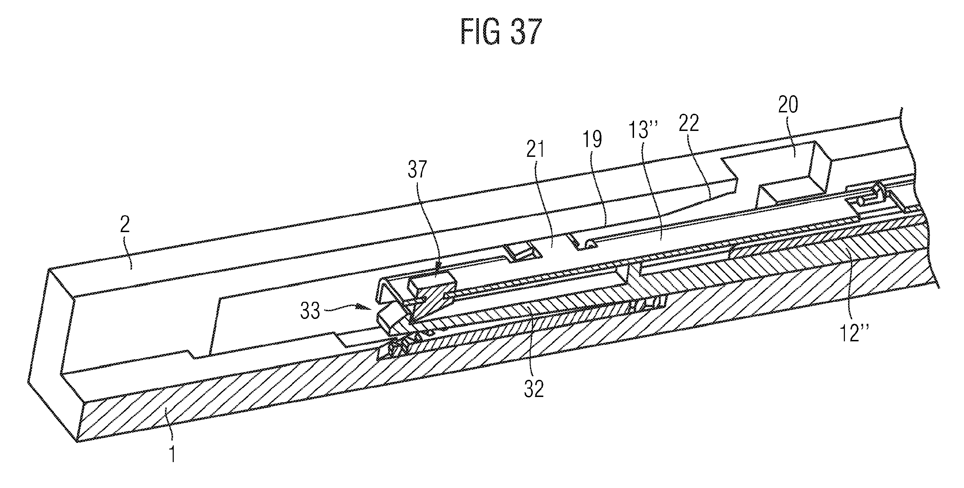

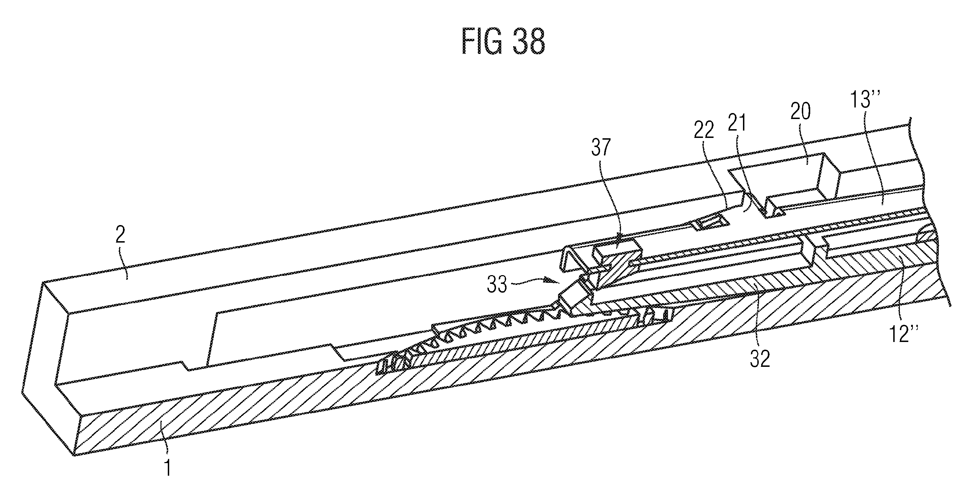

In einem radialen Abstand von der Drehachse 6 ist an dem Antriebszahnrad 5 ein zur Drehachse 6 parallel sich erstreckender Kurbelzapfen 10 hervorstehend angeordnet, der in eine Kulissenbahn 11 (Fig. 1-4) oder eine erste Kulissenbahn 31 und eine zweite Kulissenbahn 11' (Fig. 5-38) der Transportvorrichtung 4, 4', 4' eingreift, die sich quer zur Erstreckung des Bewegungswegs der Transportvorrichtung 4, 4', 4" im Schacht 3 parallel zur Ebene der Trägerplatte 1 erstreckt.

Die Transportvorrichtung 4, 4',4'' besteht aus einem plattenartigen Unterteil 12', 12" und einem plattenartigen Oberteil 13, 13', 13'', die zwischen sich einen Aufnahmeschlitz 14 bilden, in den durch eine Einführöffnung 16 eine Chipkarte 15 bis zur Anlage an Anschlägen 17 der Transportvorrichtung 4, 4', 4' einführbar ist. Dabei sind Unterteil 12', 12'' und Oberteil 13, 13', 13'' die Dicke des Aufnahmeschlitzes 14 verringernd zueinander bewegbar.

Das Oberteil 13 weist die zweite Kulissenbahn 11, 11' auf.

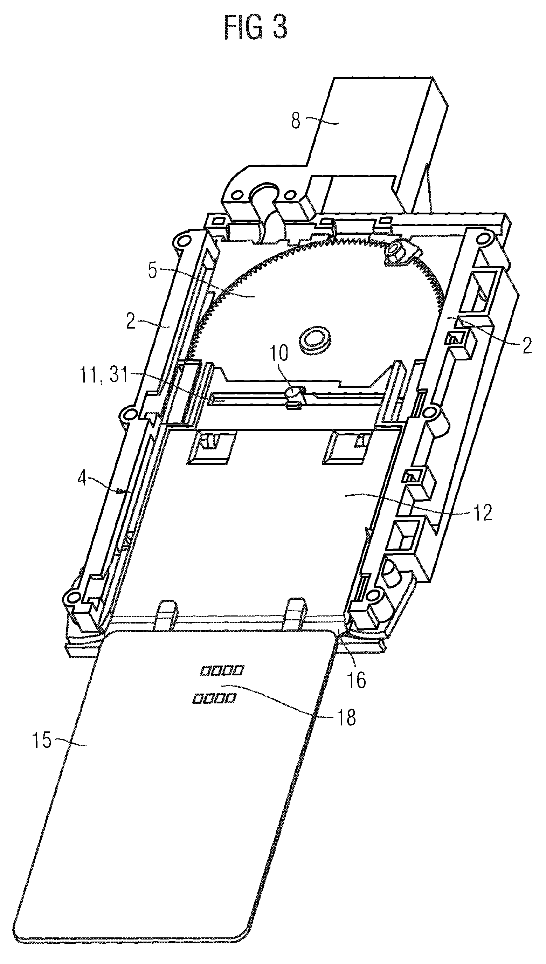

In der in den Figuren 3, 5 und 6 dargestellten Ausfahrpositionen der Transportvorrichtung 4, 4', 4" befindet sich der Kurbelzapfen 10 in einer der Einführöffnung 16 näheren Mittenposition zwischen den beiden seitlichen Enden der Kulissenbahn 11, 11'.

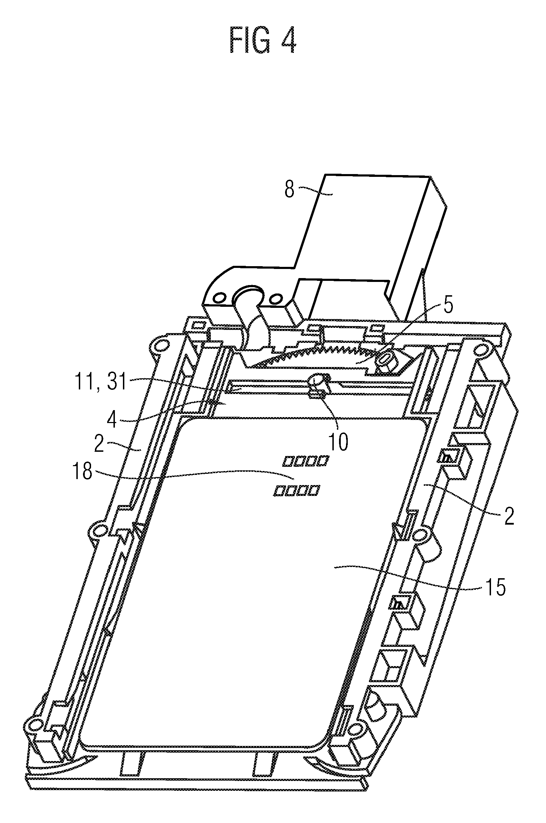

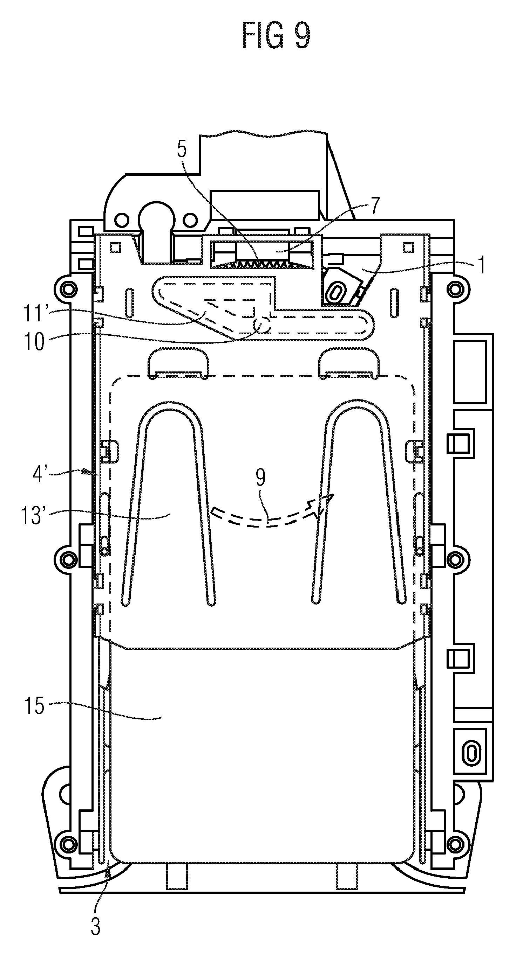

In der in den Figuren 4 und 9 dargestellten Einzugsposition ist das Antriebszahnrad 5 um 180° gedreht, so daß sich dann der Kurbelzapfen 10 in einer der Einführöffnung 16 entfernten Mittenposition zwischen den beiden seitlichen Enden der Kulissenbahnen 11, 11' und 31 befindet.

Durch diese Drehung des Antriebszahnrades 5 um 180° wird durch Wandern des Kurbelzapfens 10 in der Kulissenbahnen 11 oder 11' und 31 die Transportvorrichtung 4, 4', 4'' aus ihrer Ausfahrposition, in der die Chipkarte 15 in den Einführschlitz 16 einführbar ist, in die Einzugsposition bewegt.

Dabei wird auch die Chipkarte 15 in die Einzugsposition bewegt, in der ein auf der Chipkarte 15 angeordneter Datenspeicher 18 mit nicht dargestellten feststehenden Kontakten kontaktiert, so daß die Daten des Datenspeichers 18 in eine ebenfalls nicht dargestellter Lese- und Speichereinheit des elektronischen Fahrtschreibers eingelesen werden können.

Bei weiterer Drehung des Antriebszahnrades 5 und Wandern des Kurbelzapfens 10 in der Kulissenbahnen 11, 11', 31 wird die Transportvorrichtung 4, 4, 4'' wieder in ihre Ausfahrposition bewegt, so daß die Chipkarte 15 wieder entnommen werden kann.

In den Seitenführungen 2 sind jeweils zwei hintereinander angeordnete, zum Schacht 3 hin offene Schlitze 19 ausgebildet, die an ihren der Einführöffnung näheren Enden Öffnungen 20 aufweisen, in denen seitlich hervorstehende Führungslappen 21 des Oberteils 13, 13' von oben her einsetzbar sind, wenn sich die Transportvorrichtung 4, 4', 4' in der Ausfahrposition befindet.

Die Schlitze 19 besitzen an ihren in die Öffnungen 20 mündenden Enden feststehende Rampen 22, über die sich die Schlitzbreite der Schlitze 19 verringert, so daß bei einer Bewegung der Transportvorrichtung 4, 4', 4' aus der Ausfahrposition in Richtung zur Einzugsposition die Führungslappen 21 entlang der Rampe 22 in die Schlitze 19 eingeführt werden, wobei sich das Oberteil 13, 13', 13'' die Dicke des Aufnahmeschlitzes 14 verringernd auf das Unterteil 12', 12'' zubewegt und eine im Aufnahmeschlitz 14 befindliche Chipkarte 15 festklemmt.

Das Festklemmen wird dabei bei dem Ausführungsbeispiel der Figuren 5 bis 38 noch durch in Einführrichtung frei ragende Federarme 23 unterstützt, deren freie Endbereiche in den Aufnahmeschlitz 14 hineinragen.

Die Federarme 23 sind dabei durch Stanz-Biegen des aus metallischem Blech gebildeten Oberteil 13, 13', 13'' und Unterteil 12', 12'' hergestellt.

Die Kulissenbahn 11 des Ausführungsbeispiels der Figuren 1 bis 4 erstreckt sich ausschließlich gerade quer zur Erstreckung des Bewegungswegs der Transportvorrichtung 4 und das Oberteil 13 und das nicht zu sehende Unterteil sind in Bewegungsrichtung der Transportvorrichtung 4 relativ zueinander unbeweglich.

Bei dem Ausführungsbeispiel der Figuren 5 bis 38 ist das Oberteil 13', 13'' der Transportvorrichtung 4', 4'' entgegen der Kraft von Zugfeder 29 um einen Vorhub 30 in Erstreckungsrichtung des Bewegungswegs der Transportvorrichtung 4', 4'' relativ zum Unterteil 12', 12'' verschiebbar.

Die Kulissenbahn 11' besteht dabei aus fünf Bahnteilen 24, 25, 26, 27 und 28, wobei ein erstes Bahnteil 24 sich mittig um eine dem Vorhub 30 entsprechende Länge in Erstreckungsrichtung des Bewegungswegs erstreckt. Ein zweites Bahnteil 25 erstreckt sich von dem der Einführöffnung 16 näheren Ende des ersten Bahnteils 24 gerade nach rechts quer zur Richtung des Bewegungsweges und weist eine dem Abstand des Kurbelzapfens 10 zur Drehachse 6 entsprechende Länge auf. Ein drittes Bahnteil 26 erstreckt sich entgegen der Erstreckungsrichtung des zweiten Bahnteils 25 gerade nach links von dem der Einführöffnung 16 entfernteren Ende des ersten Bahnteils 24 und weist eine dem Abstand des Kurbelzapfens 10 zur Drehachse 6 entsprechende Länge auf. Ein viertes Bahnteil 27 erstreckt sich von dem der Einführöffnung 16 näheren Ende des ersten Bahnteils 24 um eine geringere Länge als der Länge des zweiten Bahnteils 25 entgegen dem zweiten Bahnteil 25. Durch ein fünftes Bahnteil 28 sind die dem ersten Bahnteil 24 entfernten Enden des dritten Bahnteils 26 und des vierten Bahnteils 27 miteinander verbunden.

Befindet sich die Transportvorrichtung 4', 4" in ihrer Ausfahrposition, kann die Chipkarte 15 bis zu Anlage an den Anschlägen 17 über die Einführöffnung 16 in den Aufnahmeschlitz 14 eingeführt werden.

Wird die Chipkarte 15 dann noch weiter in Einführrichtung beaufschlagt, so verschiebt sich das Oberteil 13', 13" um den Vorhub 30 entgegen der Kraft der Zugfeder 29 weiter in Einführrichtung, bis eine Aktivierungsposition des Oberteils 13', 13" erreicht und von diesem ein nicht dargestellter Schalter betätigt wird, der ein Ansteuersignal erzeugt, das einer nicht dargestellten Steuereinheit zugeführt wird. Dabei bewegt sich auch der Kurbelzapfen 10 in dem ersten Bahnteil 24 aus seiner der Einführöffnung 16 entfernten Position in eine der Einführposition näheren Position.

Die Steuereinheit aktiviert dadurch den Elektromotor 8, der dadurch das Antriebsrad 5 um 180° entgegen dem Uhrzeigersinn drehend antreibt.

Dabei bewegt sich der Kurbelzapfen 10 auf den ersten 90° der Drehung des Antriebsrades 5 weiter in das zweite Bahnteil 25 bis zu dessen Ende, wodurch die Transportvorrichtung 4' um ihren halben Einzugsweg eingezogen wird.

Bei weiterer Drehung um weitere 90° bewegt sich der Kurbelzapfen 10 in dem zweiten Bahnteil 25 wieder zurück und zieht die Transportvorrichtung 4', 4" vollends in ihre Einzugsposition.

Soll die Chipkarte 15 wieder entnommen werden, wird mittels eines nicht dargestellten manuell betätigbaren Schalters ein entsprechendes Signal der Steuereinheit zugeleitet, die dann den Elektromotor 8 zum Drehantrieb des Antriebszahnrades 5 um weitere 180° antreibt.

Dabei bewegt sich der Kurbelzapfen 10 über das vierte Bahnteil 27, das fünfte Bahnteil 28 und das dritte Bahnteil 26 wieder in seine Ausgangsstellung und schiebt die Transportvorrichtung 4' in ihre Ausfahrposition.

Nun kann die Chipkarte 15 wieder entnommen werden, so daß der Fahrtschreiber für ein erneutes Einführen einer Chipkarte bereit ist.

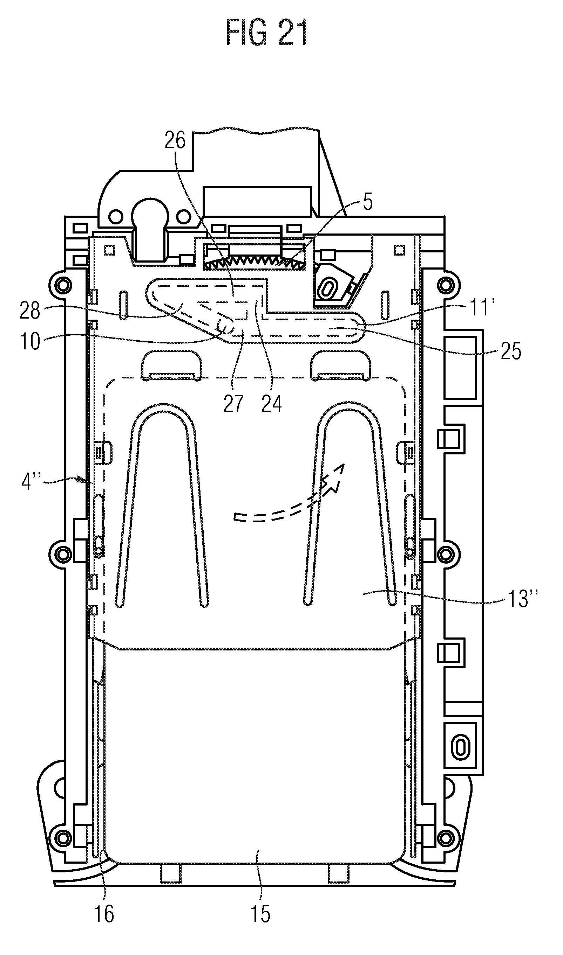

Das Ausführungsbeispiel der Figuren 21 bis 38 entspricht in Aufbau und Funktion dem Ausführungsbeispiel der Figuren 5 -19.

Das Unterteil 12' der Transportvorrichtung 4' besitzt zusätzlich beidseitig an seinem der Einführöffnung 16 abgewandten Ende freiragend hervorstehende Federarme 32, die federnd von dem Oberteil 13'' wegbewegbar sind und die an ihren freien Enden zum Oberteil 13'' gerichtete Klinken 33 besitzen.

Die Klinken 33 weisen eine zum Oberteil 13' gerichtete Rastflanke 34 auf, von der in sich der Einführöffnung 16 entfernenden Richtung eine sich vom Oberteil 13'' entfernende Klinkenrampe 35 ausgeht.

Nahe ihrem freien Ende weisen die Federarme 32 jeweils eine quer zu ihrer Auslenkrichtung voneinander weggerichtet hervorstehende Fahnen 36 auf.

Das Oberteil 13'' besitzt beidseitig an seinem der Einführöffnung 16 abgewandten Ende Sperrhaken 37 mit einer zum Unterteil 12'' gerichteten Sperrflanke 38, von der in sich der Einführöffnung 16 annähernden Richtung eine sich dem Unterteil 12'' entfernende Gleitrampe 39 ausgeht.

Im Bereich der in Einschubrichtung hinteren Seitenführungen 2 sind jeweils feststehende Niederhalter 40 angeordnet, die einen von der Einführöffnung 16 freiragend wegweisenden Niederhalterarm 41 aufweisen, der in der Ausfahrposition die Fahne 36 übergreift, so daß der Federarm 32 nicht zum Oberteil 13'' hin auslenken kann.

Damit wird sichergestellt, daß bei der vorauseilenden Einfahrbewegung des Oberteils 13'' gegenüber dem Unterteil 12'' der Sperrhaken 37 ungehindert und kollisionsfrei über die Klinke 33 hinaus bewegt werden kann.

In einem größeren Abstand von der Einführöffnung 16 als der Niederhalter 40 ist weiterhin ein als feststehende Führungsrippe ausgebildetes Blockierelement 42 angeordnet, durch das eine federnde Auslenkung des Federarms 32 und damit der Klinke 33 vom Oberteil 13'' weg blockiert ist, wenn der Sperrhaken 37 bei der Ausfahrbewegung des Oberteils 13'' die Klinke 33 überfahren hat und auf der der Einführöffnung 16 zugewandten Seite an der Klinke 33 eingerastet ist.

Dadurch kann sich der Federarm 32 nicht vom Oberteil 13'' weg auslenken und der Sperrhaken 37 von der Klinke 33 ausrasten.

Es wird damit das Oberteil 13'' durch die Klinke 33 des Unterteils 12'' in Richtung zur Einführöffnung 16 mitgenommen und damit verhindert, daß der Kurbelzapfen 10 bei der Aushubbewegung nach Erreichen des Übergangs von dem fünften Bahnteil 28 zum dritten Bahnteil 26 der zweiten Kulissenbahn 11' sicher in das dritte Bahnteil 26 eingeführt und nicht in das fünfte Bahnteil 28 zurückgeleitet wird.

## Patentansprüche

1. Karteneinzugsvorrichtung insbesondere für einen Fahrtschreiber eines Kraftfahrzeugs zum vollständigen Einzug einer Karte, insbesondere einer Chipkarte, mit einer Transportvorrichtung, die einen Aufnahmeschlitz mit einer Einführöffnung zur Aufnahme der Karte aufweist, wobei die Transporteinrichtung in einem Schacht geführt von einem durch einen Antrieb um eine Drehachse drehbar antreibbaren Antriebsteil auf einem Transportweg zwischen einer Ausfahrposition und einer Einzugsposition translatorisch bewegbar antreibbar ist, **dadurch gekennzeichnet, daß** das Antriebsteil in einer einzigen Drehrichtung (9) drehbar antreibbar ist und ein Koppelelement aufweist, das in einem Abstand zur Drehachse (6) angeordnet ist und entlang einer sich im Wesentlichen quer zur Erstreckung des Bewegungswegs der Transportvorrichtung (4, 4', 4') erstreckenden Führungsbahn an der Transportvorrichtung (4, 4', 4') bewegbar geführt ist, wobei sich das Koppelelement in der Ausfahrposition und in der Einzugsposition in einer Mittenposition zwischen den beiden Enden der Führungsbahn befindet.

2. Karteneinzugsvorrichtung nach Anspruch 1, **dadurch gekennzeichnet, daß** sich die Führungsbahn gerade erstreckt.

3. Karteneinzugsvorrichtung nach einem der vorhergehenden Ansprüche, **dadurch gekennzeichnet , daß** das Koppelelement ein Kulissenstein und die Führungsbahn eine Kulissenbahn (11, 11', 31) ist, in die das insbesondere als Kurbelzapfen (10) runden Querschnitts ausgebildete Koppelelement bewegbar eingreift.

4. Karteneinzugsvorrichtung nach einem der vorhergehenden Ansprüche, **dadurch gekennzeichnet, daß** das Antriebsteil ein Antriebszahnrad (5) ist.

5. Karteneinzugsvorrichtung nach Anspruch 4, **dadurch gekennzeichnet, daß** in das Antriebszahnrad (5) eine Zylinderschnecke (7) eingreift, die von einem Drehantrieb, insbesondere von einem Elektromotor (8) unidirektional drehbar antreibbar ist.

6. Karteneinzugsvorrichtung nach einem der vorhergehenden Ansprüche, **dadurch gekennzeichnet, daß** die Transportvorrichtung (4', 4'') entgegen einer Federkraft um einen Vorhub (30) aus der Ausfahrposition in eine Aktivierungsposition relativ zu dem in der Mittenposition befindlichen Koppelelement bewegbar ist, wobei sich die Aktivierungsposition zwischen der Ausfahrposition und der Einzugsposition befindet.

7. Karteneinzugsvorrichtung nach Anspruch 6, **dadurch gekennzeichnet, daß** bei Erreichen der Aktivierungsposition von der Transporteinrichtung (4', 4'') ein Startsignal auslösbar ist, durch das der Antrieb des Antriebsteils aktivierbar ist.

8. Karteneinzugsvorrichtung nach Anspruch 7, **dadurch gekennzeichnet, daß** in der Aktivierungsposition der Transporteinrichtung (4', 4'') ein Schalter betätigbar und ein Ansteuersignal erzeugbar oder ein Ansteuersignal von einem Sensor erzeugbar ist, das einer Steuereinheit des Antriebs zur Aktivierung des Antriebs zuführbar ist.

9. Karteneinzugsvorrichtung nach einem der vorhergehenden Ansprüche, **dadurch gekennzeichnet, daß** die Karte bis zu einem oder mehreren Anschlägen (17) der Transportvorrichtung (4', 4'') in den Aufnahmeschlitz (14) der Transportvorrichtung (4', 4'') einführbar ist.

10. Karteneinzugsvorrichtung nach einem der vorhergehenden Ansprüche, **dadurch gekennzeichnet, daß** die Transportvorrichtung (4', 4'') ein oder mehrere Halteelemente aufweist, durch die die Karte kraftschlüssig im Aufnahmeschlitz (14) haltbar ist.

11. Karteneinzugsvorrichtung nach Anspruch 10, **dadurch gekennzeichnet, daß** die Transportvorrichtung in einer oder mehreren Seitenwänden des Aufnahmeschlitzes in Einführrichtung freiragende Federarme aufweist, deren freie Endbereiche in den Aufnahmeschlitz hineingeneigt sind.

12. Karteneinzugsvorrichtung nach einem der Ansprüche 6 bis 11, **dadurch gekennzeichnet, daß** die Transportvorrichtung (4, 4', 4'') aus einem plattenartigen Unterteil (12', 12'') und einem plattenartigen Oberteil (13, 13', 13'') besteht, die mit ihren plattenartigen Ebenen entgegen einer Federkraft zueinander bewegbar und in Erstreckungsrichtung des Bewegungsweges um den Vorhub relativ zueinander verschiebbar sind sowie zwischen sich den Aufnahmeschlitz (14) bilden, wobei das Unterteil (12', 12'') eine sich gerade erstreckende erste Führungsbahn und das Oberteil (13, 13', 13'') eine die Relativbewegung zum Unterteil (12) zulassende zweite Führungsbahn aufweist und das Koppelelement sowohl entlang der ersten Führungsbahn als auch der zweiten Führungsbahn bewegbar ist.

13. Karteneinzugsvorrichtung nach Anspruch 12, **dadurch gekennzeichnet, daß** das plattenartige Oberteil (13, 13', 13'') auf seinem Bewegungsweg zwischen der Aktivierungsposition und der Einzugsposition durch eine oder mehrere feststehende Rampen (22) gegen das untere plattenartige Unterteil (12', 12'') bewegbar beaufschlagbar ist.

14. Karteneinzugsvorrichtung nach einem der Ansprüche 6 bis 13, **dadurch gekennzeichnet, daß** die Führungsbahn aus fünf Bahnteilen (24, 25, 26, 27, 28) besteht, wobei ein erstes Bahnteil (24) sich mittig um eine dem Vorhub entsprechende Länge in Erstreckungsrichtung des Bewegungswegs erstreckt, mit einem zweiten Bahnteil (25), das sich von dem der Einführöffnung (16) näheren Ende des ersten Bahnteils (24) gerade quer zur Richtung des Bewegungsweges erstreckt und eine dem Abstand des Koppelelements zur Drehachse (6) entsprechende Länge aufweist, mit einem dritten Bahnteil (26), das sich entgegen der Erstreckungsrichtung des zweiten Bahnteils (25) von dem der Einführöffnung (16) entfernteren Ende des ersten Bahnteils (24) gerade erstreckt und eine dem Abstand des Koppelelements zur Drehachse (6) entsprechende Länge aufweist, mit einem vierten Bahnteil (27), das sich von dem der Einführöffnung (16) näheren Ende des ersten Bahnteils (24) um eine geringere Länge, als der Länge des zweiten Bahnteils (25) entgegen dem zweiten Bahnteil (25) erstreckt und mit einem fünften Bahnteil (28), durch das die dem ersten Bahnteil (24) entfernten Enden des dritten Bahnteils (26) und des vierten Bahnteils (27) miteinander verbunden sind.

15. Karteneinzugsvorrichtung nach den Anspruch 14, **dadurch gekennzeichnet, daß** das Oberteil (13'') mit dem Unterteil (12'') durch eine oder mehrere Kupplungseinrichtungen verbindbar ist, die auf dem Bewegungsweg der Transportvorrichtung (4'') von der Ausfahrposition zur Einzugsposition ausgekuppelt und auf dem Bewegungsweg der Transportvorrichtung (4'') von der Einzugsposition zur Ausfahrposition während des Übergangsbereichs von dem fünften Bahnteil (28) zum dritten Bahnteil (26) eingekuppelt ist.

16. Karteneinzugsvorrichtung nach den Ansprüchen 12, 13 und 15, **dadurch gekennzeichnet, daß** die Kupplungseinrichtung ein an dem Unterteil (12'') angeordnetes, zum Oberteil (13'') gerichtetes Mitnehmerelement und ein an dem Oberteil (13'') angeordnetes, zum Unterteil (12'') gerichtetes Mitnahmeelement aufweist, wobei bei ausgekuppelter Kupplungseinrichtung Mitnehmerelement und Mitnahmeelement eingriffslos in Bewegungsrichtung der Transportvorrichtung (4'') aneinander vorbeibewegbar und bei eingekuppelter Kupplungseinrichtung das Mitnahmeelement von dem Mitnehmerelement hintergriffen und in Ausfahrrichtung der Transportvorrichtung (4'') mitnehmbar ist.

17. Karteneinzugsvorrichtung nach Anspruch 16, **dadurch gekennzeichnet, daß** das Mitnehmerelement eine Klinke (33) und/oder das Mitnahmeelement ein Sperrhaken (37) ist.

18. Karteneinzugsvorrichtung nach Anspruch 17, **dadurch gekennzeichnet, daß** die Klinke (33) eine zum Oberteil (13'') gerichtete Rastflanke (34) aufweist, von der in sich der Einführöffnung (16) entfernenden Richtung eine sich dem Oberteil (13'') entfernende Klinkenrampe (35) ausgeht.

19. Karteneinzugsvorrichtung nach Anspruch 17, **dadurch gekennzeichnet, daß** der Sperrhaken (37) eine zum Unterteil (12'') gerichtete Sperrflanke (38) aufweist, von der in sich der Einführöffnung (16) annähernden Richtung eine sich dem Unterteil (12'') entfernende Gleitrampe (39) ausgeht.

20. Karteneinzugsvorrichtung nach einem der Ansprüche 16 bis 19, **dadurch gekennzeichnet, daß** das Mitnehmerelement entgegen einer Federkraft in sich von dem Oberteil (13'') entfernender Richtung auslenkbar ist.

21. Karteneinzugsvorrichtung nach Anspruch 20, **dadurch gekennzeichnet, daß** das Mitnehmerelement an dem freien Ende eines Federarms (32) des Unterteils (12'') angeordnet ist, der sich von dem Unterteil (12'') aus in von der Einführöffnung (16) entfernender Richtung erstreckt.

22. Karteneinzugsvorrichtung nach Anspruch 20, **dadurch gekennzeichnet, daß** das Mitnehmerelement bei ausgekuppelter Kupplungseinrichtung auf dem Bewegungsweg an dem Mitnahmeelement vorbei zur Einzugsposition durch einen feststehenden Niederhalter (40) in Richtung von dem Oberteil (13'') weg beaufschlagt ist.

23. Karteneinzugsvorrichtung nach Anspruch 20, **dadurch gekennzeichnet, daß** bei eingekuppelter Kupplungseinrichtung eine federnde Auslenkung des Mitnehmerelements von dem Oberteil (13'') weg durch ein feststehendes Blockierelement (42) blockiert ist.

24. Karteneinzugsvorrichtung nach den Ansprüchen 20 und 22, **dadurch gekennzeichnet, daß** der Federarm (32) eine quer zu seiner Auslenkrichtung hervorstehende erste Fahne (36) aufweist, die von dem Niederhalter (40) von dem Oberteil (13'') weg beaufschlagbar ist.

25. Karteneinzugsvorrichtung nach den Ansprüchen 20 und 23, **dadurch gekennzeichnet, daß** der Federarm (32) eine quer zu seiner Auslenkrichtung hervorstehende zweite Fahne (36) aufweist, die die Auslenkung des Mitnehmerelements von dem Oberteil (13'') weg blockierend an dem Blockierelement (42) anlegbar ist.

26. Karteneinzugsvorrichtung nach den Ansprüchen 24 und 25, **dadurch gekennzeichnet, daß** die erste Fahne und die zweite Fahne durch ein einziges Fahnenbauteil (36) gebildet sind.
